Europäisches Patentamt

European Patent Office

Office européen des brevets

(19)

(11) Veröffentlichungsnummer: **0 163 750**
**A1**

## (12) EUROPÄISCHE PATENTANMELDUNG

(21) Anmeldenummer: **84106326.6**

(22) Anmeldetag: **02.06.84**

(51) Int. Cl.⁴: **C 02 F 1/78**

(43) Veröffentlichungstag der Anmeldung: **11.12.85**
**Patentblatt 85/50**

(84) Benannte Vertragsstaaten: **AT BE CH FR GB IT LI LU NL SE**

(71) Anmelder: **Gesslauer, Rudolf, Waldstrasse 6, D-3501 Schauenburg (DE)**

(72) Erfinder: **Gesslauer, Rudolf, Waldstrasse 6, D-3501 Schauenburg (DE)**

(74) Vertreter: **Freiherr von Schorlemer, Reinfried, Brüder-Grimm-Platz 4, D-3500 Kassel (DE)**

(54) **Ozon-Trinkwasseraufbereitungsanlage.**

(57) Ozon-Trinkwasseraufbereitungsanlage mit einem Trinkwasser-Vorratsbehälter (1), einer mit diesem verbundenen Umwälzleitung (2) für das Trinkwasser und einer in die Umwälzleitung mündenden, mit einem Ozongenerator (6) verbundenen Ozon-Zuführleitung (7), wobei die Anlage als komplett vorgefertigtes Haushaltsgerät ausgebildet ist, einen Anschluß (9) für eine Rohwasserquelle aufweist und mit einer dem Vorratsbehälter zugeordneten, zur Kühlung des Trinkwassers bestimmten Kühleinrichtung (15) versehen ist.

EP 0 163 750 A1

Ozon-Trinkwasseraufbereitungsanlage
_____

Die Erfindung betrifft eine Ozon-Trinkwasseraufbereitungsanlage der im Oberbegriff des Anspruchs 1 definierten Gattung.

Trinkwasseraufbereitungsanlagen dieser Art sind in vielfältiger Form bekannt. Sie dienen vor allem der totalen Entkeimung des Wassers und besitzen gegenüber herkömmlichen,
mit Chlor betriebenen Anlagen viele Vorteile. Sie finden
teilweise als stationäre Großanlagen (DE-OS 28 48 178) in
Verbindung mit kommunalen Trinkwasserversorgungsanlagen,
Abwasserentkeimungsanlagen, Schwimmbädern od. dgl., teilweise als Kleinanlagen (deutsche Patentanmeldung P 32 08 912),
die auch transportabel sein können, zur Trinkwasserbereitung in kleinen Mengen Anwendung, vorzugsweise in trinkwasser- oder zivilisationsarmen Gegenden.

In wärmeren Gegenden, z.B. den arabischen Ländern, besteht
neben der allgemeinen Trinkwasseraufbereitung häufig das
Problem, daß ein mit Trinkwasserqualität angelieferter
oder bereit gestellter Wasservorrat nach kurzer Speicherzeit ungenießbar wird, weil das Wasser aufgrund der hohen
Temperaturen, die leicht 40 $^{\circ}$C und mehr erreichen können,
zu warm wird und/oder im Vorratsbehälter verfault oder in
sonstiger Weise verdorben wird. Derartige Probleme ergeben
sich vor allem in Fällen, in denen das Trinkwasser-Leitungsnetz nicht ausreichend tief vergraben ist, in denen
das Trinkwasser in Vorratsbehältern zwischengespeichert wird, die sich auf den Dachböden von Ein- oder Mehrfamilienhäusern befinden, oder in denen der Wasserverbrauch vergleichsweise gering ist, so daß das Trinkwasser häufig über
längere Zeitspannen hinweg im Leitungsnetz oder Vorratsbehälter stehen bleibt. Eine Lösung dieses Problems ist bisher nicht möglich, so daß die Trinkwasserversorgung vor
allem in den bezeichneten Gegenden noch mit vielen Mängeln
behaftet ist.

Der Erfindung liegt die Aufgabe zugrunde, eine Ozon-Wasseraufbereitungsanlage zu schaffen, die in jedem Haushalt installiert und zur zusätzlichen Aufbereitung des jeweils vorhandenen Rohwassers eingesetzt werden kann.

Zur Lösung dieser Aufgabe sind die kennzeichnenden Merkmale
des Patentanspruchs 1 vorgesehen.

Die Erfindung schafft erstmals eine Aufbereitungsanlage,
die das Wasser nicht nur aufbereitet, d.h. durch Entkeimung
und dgl. trinkbar macht, sondern gleichzeitig auch abkühlt
und dadurch genießbar und schmackhaft macht. Da die erfindungsgemäße  Anlage vorwiegend dazu dient, einen an sich
schon Trinkwasserqualität aufweisenden, aber durch längeres
Stehen in der Hitze wieder verdorbenen und stark erwärmten
Wasservorrat aufzubereiten, kann sie als kleines, kompaktes
Gerät nach Art eines Kühlschranks od. dgl. ausgebildet oder
in einen Kühlschrank od. dgl. integriert werden. Vorzugsweise wird die Anlage mit einer automatischen Steuerung versehen, die einen gewissen Wasservorrat im Vorratsbehälter
und eine vorgewählte Temperatur dieses Wasservorrats sicherstellt. Im übrigen braucht die Anlage im Haushalt lediglich
an die im Einzelfall vorhandene Rohwasserquelle und das
elektrische Netz angeschlossen werden.

Außer für den beschriebenen Zweck eignet sich die Erfindung natürlich auch zur Ausrüstung von Campingfahrzeugen, Yachten od. dgl., in denen für längere Zeiträume Trinkwasservorräte mitgeführt werden müssen.

Weitere vorteilhafte Merkmale der Erfindung ergeben sich aus den Unteransprüchen.

Die Erfindung wird nachfolgend in Verbindung mit der beiliegenden Zeichnung an einem Ausführungsbeispiel näher erläutert. Es zeigen:

Fig. 1 und 2 je ein Flußdiagramm eines Ausführungsbeispiels und

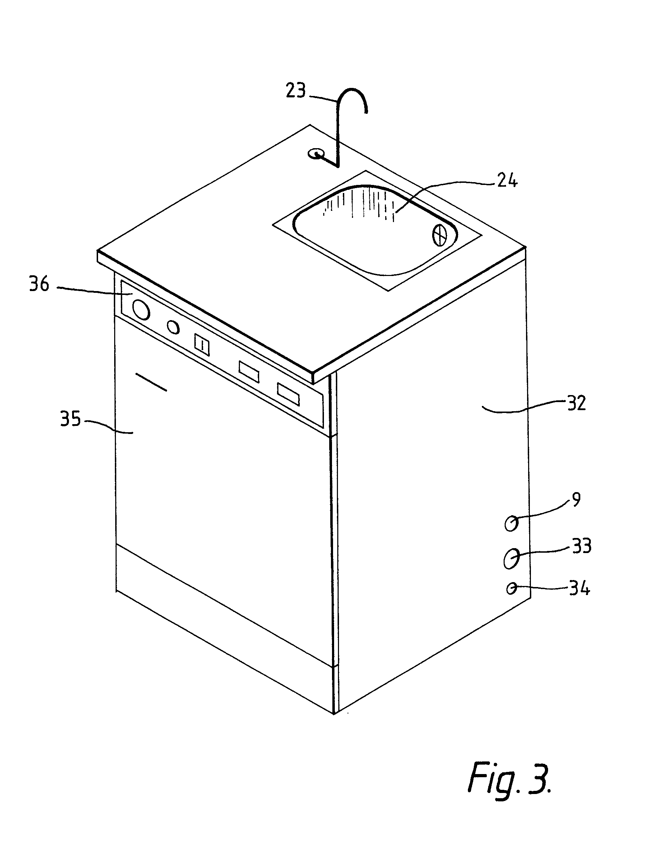

Fig. 3 die erfindungsgemäße Aufbereitungs- und Kühlanlage in der Form eines Küchenmöbels.

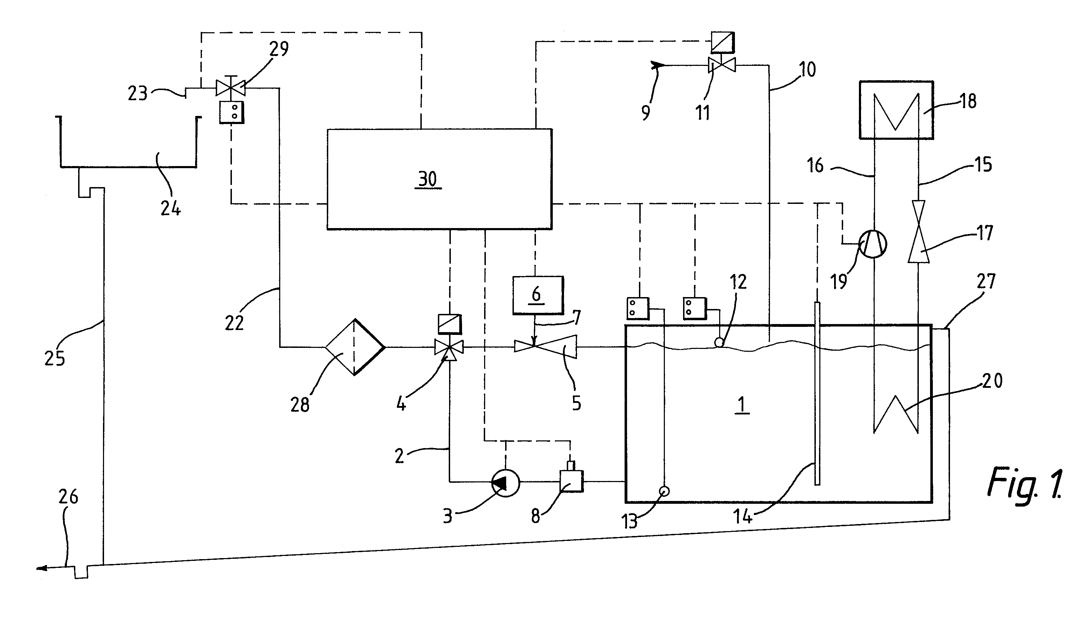

Die erfindungsgemäße Ozon-Wasseraufbereitungsanlage enthält nach Fig. 1 einen Trinkwasser-Vorratsbehälter 1, der einen unteren, mit dem einen Ende einer Umwälzleitung 2 verbundenen Auslaß und einen oberen, mit dem anderen Ende der Umwälzleitung 2 verbundenen Einlaß aufweist. In die Umwälzleitung 2 sind - in Strömungsrichtung hintereinander - eine Umwälzpumpe 3, die das im Vorratsbehälter 1 befindliche Trinkwasser durch den Auslaß absaugt und durch den oberen Einlaß wieder zuführt, ein Dreiwegehahn 4 und ein Injektor 5 geschaltet, wobei der Injektor 5 mit einer an einen Ozongenerator 6 angeschlossenen Ozon-Zuführleitung 7 verbunden ist. In die Umwälzleitung 2 ragt schließlich die Meßsonde einer die Trinkwasserqualität überwachenden Meßeinrichtung 8, vorzugsweise an einer Stelle zwischen der Umwälzpumpe 3 und dem Auslaß des Vorratsbehälters 1, damit die Sonde auf der Unterdruckseite der Umwälzpumpe angeordnet ist.

Dem Vorratsbehälter 1 ist weiterhin ein Anschluß 9 zugeordnet, der mit einer in den Vorratsbehälter 1 mündenden Rohwasser-Zuführleitung 10 verbunden ist und zum Anschluß an eine nicht dargestellte Rohwasserquelle, z.B. eine Leitung dient, die an das örtliche Wasserleitungsnetz oder einen auf dem Dachboden eines Gebäudes angeordneten Trinkwasserspeicher angeschlossen ist. In die Zuführleitung 10 ist ein Absperrventil 11 geschaltet.

Niveausonden, z.B.
Der Vorratsbehälter 1 ist ferner mit zwei Schwimmerschaltern 12 und 13 versehen, die einem maximalen bzw. einem minimalen Trinkwasserniveau im Vorratsbehälter 1 zugeordnet sind. Die Temperatur des Trinkwassers wird mit einem Temperaturfühler 14 überwacht.

Zur Kühlung des Trinkwassers dient eine Kühleinrichtung 15, die nur schematisch angedeutet ist und nach Art herkömmlicher Kältemaschinen eine Umwälzleitung 16 für ein Kältemittel enthält, in die ein Kompressor 17, ein Kondensator 18, ein Entspannungsventil 19 und ein Verdampfer 20 geschaltet sind, der im Trinkwasservorrat des Vorratsbehälters 1 angeordnet ist, so daß das im Verdampfer 20 verdampfte Kältemittel dem Trinkwasser die zum Verdampfen benötigte Verdampfungswärme entzieht und das Trinkwasser daher abkühlt.

Mit dem dritten Anschluß des Dreiwegehahns 4 ist durch eine Trinwasserleitung 22 ein Wasserhahn 23 verbunden, der über einem Becken 24 od. dgl. angeordnet ist, dessen Abfluß über eine Abflußleitung 25 mit einer Abwasserleitung 26 verbunden ist, an die auch ein am Vorratsbehälter 1 vorgesehener Überlauf 27 angeschlossen ist, der eine Überfüllung des Vorratsbehälters 1 verhindert. In die Trinkwasserleitung 22 sind ein Aktivkohlefilter 28 und ein Absperrventil 29 geschaltet.

Die Umwälzpumpe 3, der Dreiwegehahn 4, der Ozongenerator 6, das Absperrventil 11, die Schwimmerschalter 12 und 13, die Kühleinrichtung 15 und das Absperrventil 29 bestehen aus steuerbaren, vorzugsweise elektrisch steuerbaren Einrichtungen, während die Meßeinrichtung 8 und der Temperaturfühler 14 aus Elementen bestehen oder diese enthalten, die die überwachte Eigenschaft mit einem Signal, vorzugsweise einem elektrischen Signal anzeigen. Der Dreiwegehahn 4 und die Absperrventile 11 und 29 bestehen zu diesem Zweck vorzugsweise aus Magnetventilen, während die Meßeinrichtung 8 vorzugsweise eine in die Umwälzleitung 2 ragende Sonde zur Messung des Redoxpotentials umfaßt. Der Temperaturfühler 14 kann aus einem Thermoelement od. dgl. bestehen. Die genannten steuerbaren Elemente und Einrichtungen sind über gestrichelt dargestellte Steuerleitungen mit einem zentralen, vorzugsweise elektronischen Steuergerät 30 verbunden, das nach Art eines Mikroprozessors ausgebildet sein kann und die beschriebene Ozon-Trinkwasseraufbereitungsanlage automatisch so steuert, daß dem Wasserhahn 29 nur Wasser mit Trinkwasserqualität entnommen werden kann.

Die Arbeitsweise der beschriebenen Trinkwasseraufbereitungsanlage ist wie folgt:

Die beiden Niveausonden 12 und 13 und das Steuergerät 30 sorgen dafür, daß der Vorratsbehälter 1 stets wenigstens bis zu einem Mindestniveau mit Wasser gefüllt ist. Sinkt der Wasserspiegel unter das Mindestniveau, wird das Absperrventil 11 geöffnet, so daß durch die Zuführleitung 10 Rohwasser nachströmt, bis das durch den Schwimmerschalter 12 überwachte Höchstniveau erreicht ist und das Absperrventil 11 wieder geschlossen wird.

Die Meßeinrichtung 8 überwacht gleichzeitig die Qualität des Wassers. Da das sogenannte Redoxpotential des Wassers bekanntlich mit abnehmendem Verschmutzungsgrad des Wassers, ausgedrückt in der Zahl der in diesem enthaltenen schädlichen Bakterien und Keime, zunimmt und daher eine einfache Überwachung der Wasserqualität ermöglicht, enthält die Meßeinrichtung vorzugsweise eine das Redoxpotential messende Sonde. Das Steuergerät 30 wird auf ein vorgewähltes Redoxpotential von beispielsweise 700 mV, bei dem absolute Trinkwasserqualität erreicht ist, fest eingestellt. Wird dieser Wert deutlich unterschritten, wird ein Schaltimpuls erzeugt, welcher der Umwälzpumpe 3, dem Ozongenerator 6 und dem Absperrventil 29 zugeleitet wird und bewirkt, daß die Umwälzpumpe 3 und der Ozongenerator 6 eingeschaltet werden und das Absperrventil 29 geschlossen wird, so daß keine Wasserentnahme am Wasserhahn 23 mehr möglich ist.

Nach dem Einschalten der Umwälzpumpe 3 wird das im Vorratsbehälter 1 befindliche Wasser durch die Umwälzleitung 2 umgewälzt. Gleichzeitig wird mittels des Ozongenerators 6 Ozon erzeugt, das dem Injektor 5 zugeführt wird und das durch die Umwälzleitung 2 strömende Wasser aufbereitet, bis dieses wieder Trinkwasserqualität besitzt. Meldet dann die Meßeinrichtung 8, daß die Trinkwasserqualität wiederhergestellt ist, werden die Umwälzpumpe 3 und der Ozongenerator 6 ausgeschaltet, während gleichzeitig das Absperrventil 29 in die Durchflußstellung geschaltet wird, so daß dem Wasserhahn 23 wieder Wasser entnommen werden kann. Dabei kann je nach der Anordnung des Wasserhahns 23 relativ zum Vorratsbehälter 1 zusätzlich vorgesehen sein, daß beim Öffnen des Wasserhahns 23 die Umwälzpumpe 3 eingeschaltet und der Dreiwegehahn 4 so umgestellt wird, daß das von der Umwälzpumpe 3 geförderte Wasser in die Trinkwasserleitung 22 gepumpt wird. Dabei wird das Trinkwasser mittels des Aktivkohlefilters 28 von etwaigen Ozonresten befreit und gleichzeitig im Geschmack verbessert.

Das Steuergerät steuert schließlich auch die Kühleinrichtung 15. Wird eine vorgewählte, mit dem Temperaturfühler 14 überwachte Temperatur von beispielsweise 15 $^{\circ}$C überschritten, wird die Kühleinrichtung 15 so lange eingeschaltet, bis die vorgewählte Temperatur wieder erreicht ist.

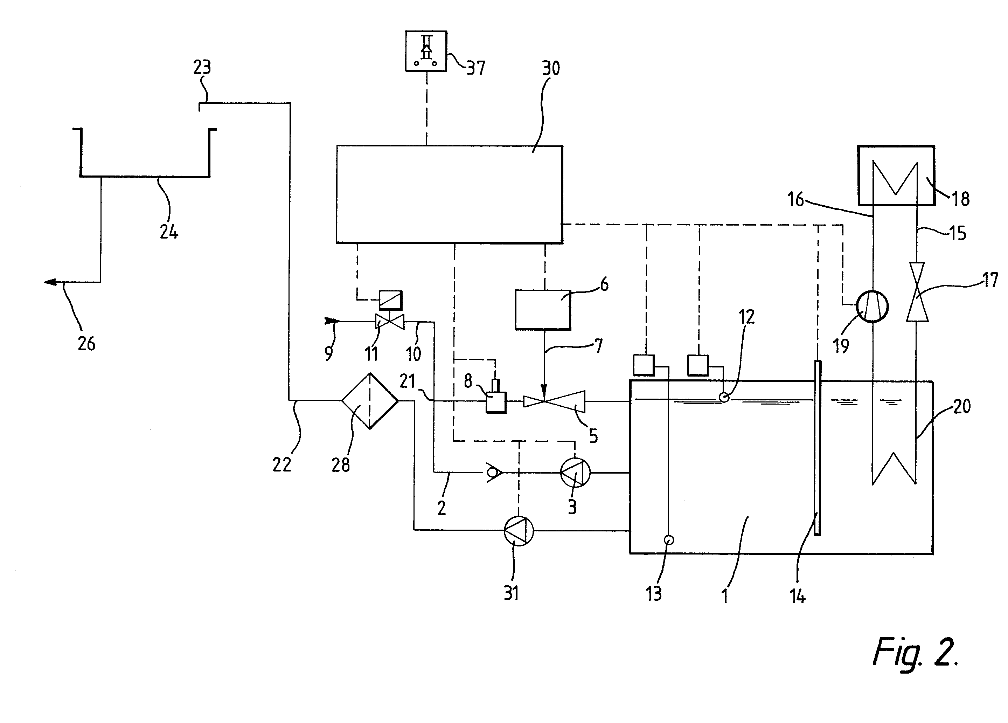

Bei der Ausführungsform nach Fig. 2, bei der gleiche Teile
mit gleichen Bezugszeichen versehen sind, ist in der Umwälzleitung 2 anstelle des Dreiweghahns 4 eine einfache Verzweigung 21 vorgesehen, die mit der Rohwasser-Zuführleitung 10
verbunden ist. Außerdem ist die Meßeinrichtung 8 zwischen
der Verzweigung 21 und dem Injektor 5 in die Umwälzleitung 2
geschaltet. Weiterhin ist die Trinkwasserleitung 22 nicht
mit der Umwälzleitung 2, sondern mit einem weiteren Auslaß
des Vorratsbehälters 1 verbunden und mit einer eigenen Trinkwasserpumpe 31 versehen. Das Absperrventil 29 fehlt und der
Wasserhahn 23 bildet lediglich eine Zapfstelle, an der Trinkwasser entnommen werden kann, wenn mittels eines Entnahme-
Tastschalters 37 die Trinkwasserpumpe 31 eingeschaltet wird.

Das Ausführungsbeispiel nach Fig. 2 arbeitet im wesentlichen
in derselben Weise wie das Ausführungsbeispiel nach Fig. 1.
Abweichend davon  wird der beim Unterschreiten des vorgewählten
Redox-Potentials erzeugte Schaltimpuls auch der Trinkwasserpumpe 31 zugeleitet, wodurch diese verriegelt wird, so daß
auch bei Betätigung des Tastschalters 37 keine Wasserentnahme
möglich ist. Die Trinkwasserpumpe 31 wird erst wieder entriegelt, wenn die Meßeinrichtung 8 die Wiederherstellung der
Trinkwasserqualität meldet und die Umwälzpumpe 3 und den
Ozongenerator 6 ausschaltet. Ein weiterer Unterschied besteht
darin, daß die Zufuhr von Rohwasser über die Umwälzleitung 2
und die Meßeinrichtung 8 erfolgt, so daß die Aufbereitung
des Trinkwassers schon bei der Rohwasserzufuhr und nicht
erst dann einsetzt, wenn Trinkwasser entnommen werden soll.

Die erfindungsgemäße Trinkwasseraufbereitungsanlage ist zweckmäßig als komplett vorgefertigtes Haushaltsgerät ausgebildet
und dazu in einem allseits geschlossenen Gehäuse 32 untergebracht (Fig. 2), von dem lediglich der Anschluß 9, ein
mit der Abwasserleitung 26 verbundener Anschluß 33, der an
einen Abfluß angeschlossen wird, und ein Anschluß 34 für
die Stromversorgung nach außen führen und das in seiner
oberen Arbeitsplatte das Becken 24 und den Wasserhahn 23
trägt. Im übrigen wird das Gehäuse 32 zweckmäßig nach Art
eines Küchenmöbels, z.B. eines Kühlschranks, gestaltet
und in seiner Vorderwand mit einer Tür 35 versehen, um den
Zugang zur Anlage zu ermöglichen. Dadurch wird eine kompakte, formschön verkleidete Anlage erhalten, die bei Bedarf
in jedem Haushalt aufgestellt und zur Bereitstellung eines
sauberen, kühlen und daher genießbaren Trinkwassers benutzt werden kann.

In seiner Vorderwand kann das Gehäuse 32 zusätzlich eine
Überwachungstafel 36 aufweisen, die z.B. den Tastschalter 37
und außerdem Anzeigeelemente zur Anzeige des jeweiligen
Betriebszustands, der Wassertemperatur und des Redoxpotentials enthalten kann. Der Tastschalter und die Anzeigeelemente
sind in nicht einzeln dargestellter, jedoch an sich bekannter Weise mit den betreffenden Teilen der Aufbereitungsanlage nach Fig. 1 verbunden.

Das Volumen des Vorratsbehälters 1 ist zweckmäßig auf den
durchschnittlichen Trinkwasserverbrauch einer Familie abgestimmt, beträgt beispielsweise zwanzig Liter und ist daher ausreichend klein bemessen, so daß nach Zuführung der
durch die Schwimmerschalter 12 und 13 vorgegebenen Rohwassermenge selbst dann nicht viel Zeit verloren geht, um die
zugeführte Wassermenge aufzubereiten und abzukühlen, wenn
der Ozongenerator 6 und die Kühleinrichtung 15 aus wirtschaftlichen Gründen einen vergleichsweise kleinen Wirkungsgrad besitzen. Alternativ kann vorgesehen sein, durch
Annäherung der Schwimmerschalter 12 und 13 die jeweils zuführbaren Mengen an Rohwasser zu begrenzen. In diesem
Fall wäre allerdings auch diejenige Menge an Trinkwasser
begrenzt, die dem Wasserhahn 23 in einem Schub entnommen
werden kann.

Für den Injektor 5 und den Ozongenerator 6 steht eine Vielzahl von bekannten Einrichtungen, vorzugsweise die nach der
deutschen Patentanmeldung P 32 08 895 zur Verfügung, wobei
dem Ozongenerator 6 zweckmäßig ein Lufttrockner nach der
deutschen Patentanmeldung P 33 04 683 zugeordnet wird.
Diese von demselben Anmelder vorgeschlagenen Einrichtungen
ermöglichen eine besonders kompakte, raumsparende und mit
hohem Wirkungsgrad erfolgende Erzeugung und Injektion des
für die Aufbereitung erforderlichen Ozons.

Die Erfindung ist nicht auf das beschriebene Ausführungsbeispiel beschränkt, das auf vielfache Weise abgewandelt
werden kann. Dies gilt einerseits für die beschriebene Anordnung und Ausbildung der verschiedenen Teile der Aufbereitungsanlage, z.B. der Kühleinrichtung 15, der Meßeinrichtung 8,
des Temperaturfühlers 14 und der Absperrventile 11 und 29, der
Trinkwasserpumpe 31 bzw. des Dreiwegehahns 4, andererseits für
die beschriebene Steuerung, die anders und beispielsweise
auch halbautomatisch vorgenommen werden könnte. So könnte
beispielsweise das Absperrventil 29 weggelassen werden und
stattdessen dem Dreiwegehahn eine Sperre zugeordnet werden,
die nur dann dessen Umschaltung auf die Trinkwasserleitung
22 erlaubt, wenn das Wasser Trinkwasserqualität besitzt.

Bei Bedarf kann schließlich dem Anschluß 9 oder der Zuführleitung 10 ein Filter zugeordnet werden, um im Rohwasser
schwebende Teilchen vom Vorratsbehälter 1 fernzuhalten.

Der Vorratsbehälter 1 ist zweckmäßig gut wärmeisoliert,
um eine nennenswerte Erwärmung des abgekühlten Wassers
durch die umgebende Atmosphäre zu verhindern.

0163750

Patentanwalt
Diplom-Physiker
**Reinfried Frhr. v. Schorlemer**

D-3500 Kassel
Brüder-Grimm-Platz 4
Telefon (0561) 15335

D 5322

Rudolf Gesslauer, 3501 Schauenburg

Patentansprüche

1) Ozon-Trinkwasseraufbereitungsanlage mit einem Trinkwasser-Vorratsbehälter, einer mit diesem verbundenen Umwälzleitung für das Trinkwasser und einer in die Umwälzleitung mündenden, mit einem Ozongenerator verbundenen Ozon-Zuführleitung, dadurch gekennzeichnet, daß sie als komplett vorgefertigtes Haushaltsgerät ausgebildet ist, einen Anschluß (9) für eine Rohwasserquelle aufweist und mit einer dem Vorratsbehälter (1) zugeordneten, zur Kühlung des Trinkwassers bestimmten Kühleinrichtung (15) versehen ist.

2) Trinkwasseraufbereitungsanlage nach Anspruch 1, dadurch gekennzeichnet, daß sie ein mit der Kühlvorrichtung (15) und einem Temperaturfühler (14) verbundenes Steuergerät (30) aufweist.

3) Trinkwasseraufbereitungsanlage nach Anspruch 1 oder 2, dadurch gekennzeichnet, daß der Anschluß (9) mit einer in den Vorratsbehälter (1) mündenden Rohwasser-Zuführleitung (10) verbunden ist.

4) Trinkwasseraufbereitungsanlage nach Anspruch 3, dadurch gekennzeichnet, daß in die Rohwasser-Zuführleitung (10) ein steuerbares Absperrorgan (11) geschaltet ist, im Vorratsbehälter (1) eine Füllstandskontrolle vorgesehen ist und das Absperrorgan (11) und die Füllstandskontrolle an das Steuergerät (30) angeschlossen sind.

5) Trinkwasseraufbereitungsanlage nach Anspruch 4, dadurch gekennzeichnet, daß die Füllstandskontrolle zwei Niveausonden (12,13) aufweist.

6) Trinkwasseraufbereitungsanlage nach wenigstens einem der Ansprüche 1 bis 5, dadurch gekennzeichnet, daß in die Umwälzleitung (2) ein steuerbarer Dreiwegehahn (4) geschaltet ist, dessen einer Anschluß über eine Trinkwaserleitung (22) mit einem Wasserhahn (23) verbunden ist.

7) Trinkwasseraufbereitungsanlage nach Anspruch 6, dadurch gekennzeichnet, daß in der Trinkwasserleitung (22) ein Aktivkohlefilter (28) angeordnet ist.

8) Trinkwasseraufbereitungsanlage nach Anspruch 6 oder 7, dadurch gekennzeichnet, daß dem Wasserhahn (23) ein steuerbares, mit dem Steuergerät (30) verbundenes Absperrorgan zugeordnet ist und in die Umwälzleitung (2) oder den Vorratsbehälter (1) eine ebenfalls mit dem Steuergerät (30) verbundene Meßeinrichtung (8) für die Trinkwasserqualität geschaltet ist.

9) Trinkwasseraufbereitungsanlage nach Anspruch 8, dadurch gekennzeichnet, daß die Meßeinrichtung (8) eine das Redoxpotential messende Einrichtung ist.

10) Trinkwasseraufbereitungsanlage nach wenigstens einem der Ansprüche 2 bis 9, dadurch gekennzeichnet, daß das Steuergerät (30) nach Art eines Mikroprozessors ausgebildet ist.

11) Trinkwasseraufbereitungsanlage nach wenigstens einem der Ansprüche 1 bis 10, dadurch gekennzeichnet, daß der Anschluß (9) an eine Rohwasserzuführleitung (10) angeschlossen ist, die mit einem in den Injektor (5) mündenden Teil der Umwälzleitung (2) verbunden ist.

12) Trinkwasseraufbereitungsanlage nach wenigstens einem der Ansprüche 1 bis 11, dadurch gekennzeichnet, daß an den Vorratsbehälter (1) eine mit einer Trinkwasserpumpe (31) versehene Trinkwasserleitung (22) angeschlossen ist.

13) Trinkwasseraufbereitungsanlage nach Anspruch 12, dadurch gekennzeichnet, daß in die Umwälzleitung (2) eine mit einem Steuergerät (30) verbundene Meßeinrichtung (8) für die Trinkwasserqualität geschaltet ist, mittels derer die Trinkwasserpumpe (31) bei unzureichender Trinkwasserqualität verriegelt wird.

Fig. 1.

1/3

0163750

Fig. 2.

0163750

Fig. 3.

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. 4) |
|---|---|---|---|
| X | US-A-3 699 776 (J. LA RAUS) <br> * Insgesamt * | 1-13 | C 02 F 1/78 |
| X | US-A-3 726 404 (V.R. TROGLIONE) <br> * Spalte 5, Zeilen 3-68; Figur 4 * | 1 | |
| A | FR-A-1 424 087 (THE WELSBACH CORP.) <br> * Insgesamt * | 1-13 | |

RECHERCHIERTE SACHGEBIETE (Int. Cl. 4)

C 02 F

Der vorliegende Recherchenbericht wurde für alle Patentansprüche erstellt.

| Recherchenort | Abschlußdatum der Recherche | Prüfer |
|---|---|---|
| DEN HAAG | 05-03-1985 | VAN AKOLEYEN H.T.M. |